# EUROPÄISCHE PATENTSCHRIFT

(11) **EP 0 928 263 B1**
(45) Veröffentlichungstag und Bekanntmachung des Hinweises auf die Patenterteilung: **06.05.2004**
(21) Anmeldenummer: 98942465.0
(22) Anmeldetag: 01.07.1998
(51) Int. Cl.: B60S 1/32, B60S 1/38

(54) **SCHEIBENWISCHER**
WINDSCREEN WIPER
ESSUIE-GLACE

(30) Priorität: 23.07.1997 DE 19731683
(43) Veröffentlichungstag der Anmeldung: 14.07.1999
(73) Patentinhaber: ROBERT BOSCH GMBH, 70442 Stuttgart (DE)
(72) Erfinder: RAPP, Harald, D-77815 Buehl (DE)
(86) Internationale Anmeldenummer: PCT/DE1998/001803
(87) Internationale Veröffentlichungsnummer: WO 1999/005009

(56) Entgegenhaltungen:
- DE-A- 3 744 237
- DE-A- 3 829 343
- DE-A- 4 406 131
- DE-A- 19 605 428

## Beschreibung

### Stand der Technik

Die Erfindung geht von einem Scheibenwischer gemäß den Merkmalen des Oberbegriffs des Patentanspruchs 1 aus.

Bekannte Scheibenwischer besitzen einen Wischarm, der aus einem Befestigungsteil und einem daran angelenkten Gelenkteil mit einer Wischstange aufgebaut ist, und ferner ein Wischblatt, das aus einem Tragbügelsystem mit einem Hauptbügel, Zwischenbügeln, Krallenbügeln und einer Wischleiste aufgebaut ist. Das Wischblatt ist am Wischarm angelenkt, indem ein hakenförmiges Ende der Wischstange zwischen zwei Seitenwangen des Hauptbügels greift und einen Gelenkbolzen umfaßt. Das so gebildete Gelenk führt das Wischblatt während der Schwenkbewegung über die Scheibe, wobei das Gelenk und das Tragbügelsystem es ermöglichen, daß sich die Wischleiste einer Wölbung der Scheibe anpassen kann.

Bei nasser oder feuchter Scheibe und einer ausreichenden Gleitgeschwindigkeit, gleitet die Wischleiste ruckfrei über die Scheibe, z.B. eine gewölbte Windschutzscheibe eines Kraftfahrzeuges, und erzeugt eine saubere, klare Sichtfläche. Sind die Scheiben verschmutzt, vereist oder nicht ausreichend feucht oder liegt Schnee auf der Scheibe, beginnt das Wischblatt zu rattern, sobald eine kritische Gleitgeschwindigkeit unterschritten wird. Da das Wischblatt dabei den Kontakt zur Scheibe kurzfristig verliert, ist das Wischbild unbefriedigend. Das Wischblatt neigt um so eher zum Rattern, je länger es ist und je mehr Bügelteile es aufweist. Ferner verhalten sich leichte Wischblätter mit einer geringen Federsteifigkeit ungünstig.

Da die Gleitgeschwindigkeit der Wischleiste vom antriebsseitigen inneren Ende zum äußeren Ende linear zunimmt, ist die Rattergefahr am inneren Ende bei niedrigen Winkelgeschwindigkeiten des Scheibenwischers besonders groß, da der Reibwert bei sinkender Geschwindigkeit stark ansteigt.

Es ist aus der DE 37 44 237 A1 ein Scheibenwischer bekannt, der zwischen dem Wischarm und einem Krallenbügel eine Einrichtung zur Führung des Wischblatts aufweist. Diese ist am Wischarm befestigt und führt mit mindestens einer Führungswange das Wischblatt im Bereich einer Anlenkstelle eines antriebsseitigen Krallenbügels. Dabei müssen die Wangen so lang sein, daß sie in allen Positionen das Wischblatt sicher führen. Je nach Krümmung der Scheibe und der Kinematik des Scheibenwischers besteht die Gefahr, daß lange Wangen in einigen Positionen mit der Scheibe kollidieren. Einen Kompromiß zu finden, ist schwierig, wenn die Scheibenwischer für verschiedene Scheiben mit sehr unterschiedlichen Krümmungen geeignet sein sollen.

### Vorteile der Erfindung

Erfindungsgemäß wird das erste Führungsteil einer Einrichtung durch ein zweites Führungsteil der Einrichtung seitlich so geführt, daß sich der Abstand des ersten Führungsteils zum Wischarm in Richtung auf die Scheibe ändern kann. Da ein Teil der Abstandsänderung zwischen der Scheibe und dem Wischarm durch das zweite Führungsteil ausgeglichen wird, können die Führungswangen des ersten Führungsteils kurz gehalten werden, so daß keine Kollision mit der Scheibe zu befürchten ist, selbst wenn die Scheibenwischer für Scheiben mit sehr unterschiedlichen Krümmungen verwendet werden. Das zweite Führungsteil ist zweckmäßigerweise von einer Federzunge gebildet die als Lenker dient. Sie führt das erste Führungsteil seitlich sehr direkt und verbindet es senkrecht zur Scheibe nachgiebig mit der Einrichtung.

Das zweite Führungsteil kann ähnlich wie das erste Führungsteil mit mindestens einer Führungswange ausgestattet sein, die mit dem ersten Führungsteil zusammenwirkt und eine teleskopartige Verschiebung zuläßt. Die Federzunge und die Führungswangen können auch in Kombination angewendet werden.

Weiterbildungen der Erfindung sind in den abhängigen Ansprüchen angegeben.

Weitere Vorteile ergeben sich aus der folgenden Zeichnungsbeschreibung.

### Zeichnung

In der Zeichnung sind Ausführungsbeispiele der Erfindung dargestellt. Die Beschreibung und die Ansprüche enthalten zahlreiche Merkmale im Zusammenhang. Der Fachmann wird die Merkmale zweckmäßigerweise auch einzeln betrachten und zu weiteren sinnvollen Kombinationen zusammenfassen.

Es zeigen:
- Fig. 1: eine Ansicht eines erfindungsgemäßen Scheibenwischers in Richtung einer Scheibe,
- Fig. 2: eine Seitenansicht entsprechend einem Pfeil II in Fig. 1,
- Fig. 3: einen vergrößerten Querschnitt entsprechend einer Linie III-III in Fig. 2 und
- Fig. 4: ein zweites Ausführungsbeispiel in einer Ansicht entsprechend Fig. 2.

### Beschreibung der Ausführungsbeispiele

Der dargestellte Scheibenwischer 10 besitzt einen Wischarm 12, der mit einem Befestigungsteil 14 an einer Antriebswelle 26 befestigt ist. An dem Befestigungsteil 14 ist ein Gelenkteil 16 zusammen mit einer Wischstange 18 angelenkt, die auch einstückig mit dem Gelenkteil 16 ausgeführt sein kann und zu dem Wischarm 12 gehört. Der Scheibenwischer 10 besitzt ferner ein Wischblatt 20, das ein Tragbügelsystem 22 mit einem Hauptbügel 24 und Krallenbügeln 28 aufweist. Diese sind an dem Hauptbügel 24 über Nietbolzen 34 angelenkt. Bei langen Wischblättern 20 ist es zweckmäßig, zwischen dem Hauptbügel 24 und den Krallenbügeln 28 Zwischenbügel einzufügen und mit diesem gelenkig zu verbinden.

Die Krallenbügel 28 greifen mit ihren Haltekrallen 30 in das Profil einer Wischleiste 38 und umgreifen damit seitlich in das Profil eingelegte Federschienen 40. Anstelle von zwei seitlich eingefügten Federschienen 40 kann auch eine nicht dargestellte Federschiene verwendet werden, die mittig durch das Profil der Wischleiste 38 geführt ist.

Das Wischblatt 20 ist am Wischarm 12 angelenkt, indem ein hakenförmiges Ende der Wischstange 18 zwischen zwei Seitenwangen 32 des Hauptbügels 24 greift und einen Gelenkbolzen 36 umfaßt. Das so gebildete Gelenk erlaubt dem Wischblatt 20 eine Schwenkbewegung um eine Querachse 42 und führt das Wischblatt 20 seitlich in Bewegungsrichtung 56 des Scheibenwischers 10 über eine Scheibe 50.

Am Wischarm 12, und zwar bei dem gezeigten Ausführungsbeispiel am Gelenkteil 16, ist im Bereich des endseitigen, zur Antriebswelle 26 hinweisenden Krallenbügels 28 eine Einrichtung 44 zur seitlichen Führung des Wischblatts 20 vorgesehen. Sie ist im Bereich der Anlenkstelle des Krallenbügels 28 angeordnet und mit dem Gelenkteil 16 fest verbunden, z.B. durch kleben, schweißen, löten, klipsen, klemmen usw.. Die Befestigungsart richtet sich im wesentlichen nach der Ausgestaltung des Wischarms 12 in diesem Bereich.

Die Einrichtung 44 besitzt ein erstes Führungsteil 46, das mit zwei Führungswangen 52 die Gelenkstelle, insbesondere den Nietbolzen 34, des Krallenbügels 28 umgreift und in bezug auf den Wischarm 12 führt. Dadurch wird die Gefahr des Ratterns am antriebsseitigen Ende der Wischleiste 38 bei niedrigen Gleitgeschwindigkeiten verringert, so daß der Scheibenwischer 10 mit geringeren mittleren Wischgeschwindigkeiten betrieben werden kann.

Das erste Führungsteil 46 wird von einem zweiten Führungsteil 48 der Einrichtung 44 geführt, so daß die Führungswangen 52 des ersten Führungsteils 46 kurz gehalten werden können und eine Kollision der Führungswangen 52 mit der Scheibe 50 auch bei starken Wölbungen der Scheibe 50 nicht zu befürchten ist.

Das zweite Führungsteil 48 weist im vorliegenden Ausführungsbeispiel ebenfalls Führungswangen 54 auf, zwischen denen das erste Führungsteil 46 geführt ist, das zweckmäßigerweise verliersicher, z.B. durch ein nachgiebiges Element 58, mit der Einrichtung 44 verbunden ist.

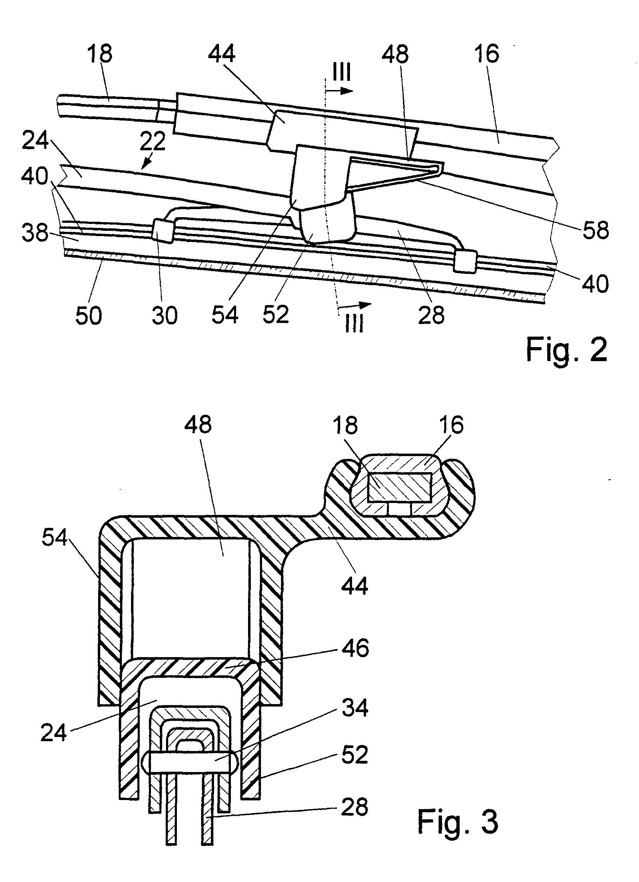

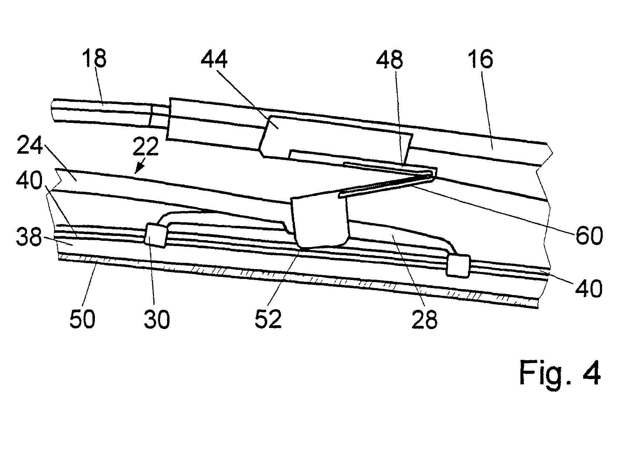

Das zweite Führungsteil 48 kann auch aus einer Federzunge 60 bestehen, wie in Fig. 4 dargestellt, die das erste Führungsteil 46 mit der Einrichtung 44 in der Weise verbindet, daß das erste Führungsteil 46 in Bewegungsrichtung 56 des Scheibenwischers 10 starr geführt ist, während es senkrecht zur Scheibe 50 gegenüber dem Wischarm 12 nachgeben kann. Es ist natürlich auch möglich, als zweites Führungsteil 48 eine Kombination zwischen einer Federzunge und Führungswangen 54 zu wählen (Fig. 2), wobei die Federzunge dann die Funktion des nachgiebigen Elements 58 übernimmt. In diesem Fall kann die Federzunge 60 schwächer ausgelegt werden, da die durch die Wischbewegung entstehenden seitlichen Kräfte durch die Führungswangen 54 aufgenommen werden.

Die Einrichtung 44 kann aus einzelnen Blechteilen hergestellt und zusammengesetzt sein, bevorzugt ist jedoch ein Kunststoffspritzteil aus einem geeigneten Kunststoff.

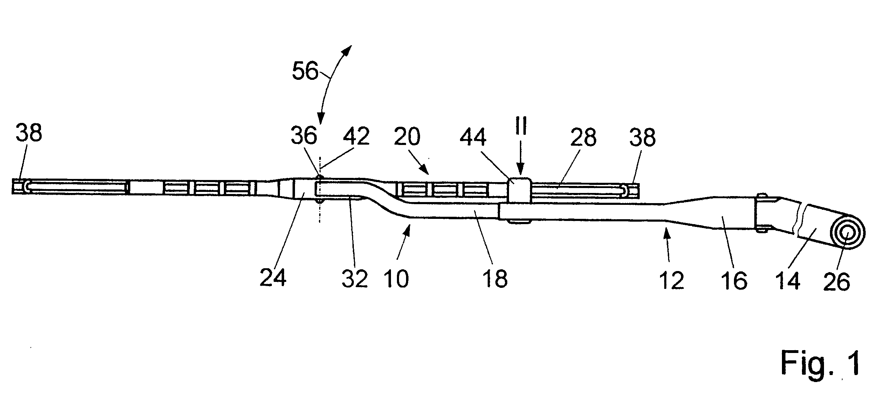

Die Fig. 1 und 2 zeigen einen Scheibenwischer 10, bei dem eine Wischstange 18 gekröpft ist, so daß ein Teil des Wischblatts 20 parallel zum Gelenkteil 16 bzw. zur Wischstange 18 verläuft. Die Erfindung läßt sich jedoch in gleicher Weise bei Scheibenwischern 10 anwenden, bei denen das Wischblatt 20 in Richtung einer ungekröpften Wischstange 18 verläuft, so daß das Wischblatt 20 mit seinem antriebsseitigen Ende im wesentlichen unterhalb des Wischarms 12 verläuft oder ebenfalls seitlich daneben, wenn das Wischblatt in sogenannter "side-lock"-Technik am Wischarm angelenkt ist.

## Patentansprüche

1. Scheibenwischer (10) mit einem Wischarm (12) und einem um eine Querachse (42) schwenkbar daran angelenkten Wischblatt (20), das im Abstand zur Querachse (42) mittels einer am Wischblatt (12) befestigten Einrichtung (44) mit einem ersten Führungsteil (46) seitlich geführt ist, **dadurch gekennzeichnet, dass** ein zweites Führungsteil (48) das erste Führungsteil (46) der Einrichtung (44) seitlich so führt, dass sich der Abstand des ersten Führungsteils (46) zum Wischarm (12) senkrecht zu einer Scheibe (50) unabhängig vom Wischarm (12) ändern kann und dass das zweite Führungsteil (48) eine Federzunge (60) ist, die an einem Ende mit dem ersten Führungsteil (46) fest verbunden und am anderen Ende am Wischarm (12) befestigt ist.

2. Scheibenwischer (10) nach Anspruch 1, **dadurch gekennzeichnet, daß** das zweite Führungsteil (48) mindestens eine Führungswange (54) aufweist, die mit dem ersten Führungsteil (46) zusammenwirkt.

3. Scheibenwischer (10) nach einem der vorhergehenden Ansprüche, **dadurch gekennzeichnet, daß** die Einrichtung (44) ein Kunststoffspritzteil ist.

4. Scheibenwischer (10) nach einem der vorhergehenden Ansprüche, **dadurch gekennzeichnet, daß** die Einrichtung (44) an einer Wischstange (18) oder einem Gelenkteil (16) des Wischarms (12) gehalten ist.

## Claims

1. Wiper (10) having a wiper arm (12) and a wiper blade (20) which is coupled to the wiper arm in a manner such that it can pivot about a transverse axis (42) and is guided laterally at a distance from the transverse axis (42) by a first guide part (46) by means of a device (44) fastened to the wiper blade (12), **characterized in that** a second guide part (48) guides the first guide part (46) of the device (44) laterally in such a manner that the distance of the first guide part (46) from the wiper arm (12) can change perpendicularly with respect to a window (50) independently of the wiper arm (12), and **in that** the second guide part (48) is a spring tongue (60) which is connected fixedly at one end to the first guide part (46) and is fastened at the other end to the wiper arm (12).

2. Wiper (10) according to Claim 1, **characterized in that** the second guide part (48) has at least one guide cheek (54) which interacts with the first guide part (46).

3. Wiper (10) according to one of preceding claims, **characterized in that** the device (44) is an injection-moulded plastic part.

4. Wiper (10) according to one of the preceding claims, **characterized in that** the device (44) is held on a wiper rod (18) or on an articulated part (16) of the wiper arm (12).

## Revendications

1. Essuie-glace (10) comprenant un bras d'essuyage (12) et une raclette d'essuyage (20) pouvant basculer autour d'un axe transversal (42) et qui, à une certaine distance de cet axe, est guidée latéralement par un dispositif (44) fixé à la raclette et présentant une première partie de guidage (46),
**caractérisé en ce qu'**
une seconde partie de guidage (48) guide latéralement la première partie de guidage (46) du dispositif (44) de manière que la distance entre la première partie de guidage (46) et le bras d'essuyage (12) mesurée perpendiculairement à une vitre (50) peut varier indépendamment du bras d'essuyage (12), la seconde partie de guidage (48) étant une languette élastique (60) qui est solidaire à une de ses extrémités de la pièce de guidage (46) et à l'autre extrémité du bras d'essuyage (12).

2. Essuie-glace (10) selon la revendication 1,
**caractérisé en ce que**
la seconde partie de guidage (48) présente au moins une joue de guidage (54) qui coopère avec la première partie de guidage (46).

3. Essuie-glace (10) selon la revendication 1 ou 2,
**caractérisé en ce que**
le dispositif (44) est une pièce en matière plastique injectée.

4. Essuie-glace (10) selon la revendication 1, 2 ou 3,
**caractérisé en ce que**
le dispositif (44) est monté sur une tige (18) ou sur une partie articulée (16) du bras d'essuie-glace (12).
